# EUROPÄISCHE PATENTSCHRIFT

(11) **EP 1 963 902 B1**
(45) Veröffentlichungstag und Bekanntmachung des Hinweises auf die Patenterteilung: **17.02.2010**
(21) Anmeldenummer: 06819025.5
(22) Anmeldetag: 13.12.2006
(51) Int. Cl.: G02B 15/16, G02B 27/10, G02B 27/04

(54) **ANORDNUNG ZUR VERSTELLUNG VON OPTISCHEN KOMPONENTEN UND/ODER LINSENGRUPPEN, IN VARIABBILDUNGSSYSTEMEN**
ARRANGEMENT FOR ADJUSTING OPTICAL COMPONENTS AND/OR LENS GROUPS IN VARIABLE PICTURE-TAKING SYSTEMS
DISPOSITIF DE RÉGLAGE DE COMPOSANTS OPTIQUES ET/OU DE GROUPES DE LENTILLES DANS DES SYSTÈMES D'IMAGERIE VARIABLE

(30) Priorität: 21.12.2005 DE 102005062229
(43) Veröffentlichungstag der Anmeldung: 03.09.2008
(73) Patentinhaber: Carl Zeiss MicroImaging GmbH, 07745 Jena (DE)
(72) Erfinder: WINTEROT, Johannes, 07745 Jena (DE); KAUFHOLD, Tobias, 07749 Jena (DE); ROBOTTA, Rainer, 07751 Jena - OT Closewitz (DE)
(74) Vertreter: Scholze, Humbert
(86) Internationale Anmeldenummer: PCT/EP2006/011961
(87) Internationale Veröffentlichungsnummer: WO 2007/079882

(56) Entgegenhaltungen:
- DE-B- 1 260 292
- JP-A- 1 020 513
- US-A- 3 051 048
- US-A- 5 636 062

## Beschreibung

Die Erfindung betrifft eine Anordnung zur Verstellung von optischen Komponenten und/oder Linsengruppen in Varioabbildungssystemen, insbesondere in Zoomsystemen, welche vorzugsweise in Mikroskopen zur Veränderung der Vergrößerung als Vergrößerungswechsler Anwendung finden.

Eine Veränderung der Brennweite und/oder der Vergrößerung eines optischen Systems wird meist durch eine gegenseitige Verschiebung optischer Komponenten dieses Systems realisiert. Dabei werden mindestens zwei optisch-mechanische Baugruppen des Systems so relativ zueinander verschoben und positioniert, dass sie in ihrem Bewegungsablauf und ihrer Position den theoretischen, bzw. vorher berechneten Vorgaben entsprechen. Zur Erreichung eines entsprechenden Bewegungsablaufes werden meist geeignete mechanische Getriebe verwendet.

Zum Antrieb derartiger optischer Komponenten in ZoomSystemen gibt es unterschiedliche Prinzipien.

So wird bei einem derartigen System die gegenseitige Bewegung von einem zentralen Antriebselement abgeleitet.

Weiterhin ist es bekannt, die Positionen der gegeneinander zu verstellenden Linsengruppen oder optischen Komponenten mittels so genannter Topfkurven innerhalb des Gehäuses zu codieren, von welcher sie kontinuierlich abgetastet werden. Diese Anordnung ist raumsparend und wird deshalb häufig angewendet. Durch Drehen der Topfkurve wird eine Bewegung der relativ zueinander zu positionierenden Komponenten erreicht.

Eine weitere Methode der Einstellung und Positionierung optischer Komponenten innerhalb eines Vergrößerungswechslers besteht darin, die Bewegung einer von zwei Komponenten an ein lineares Stellelement zu koppeln, welches von einem zentralen Antriebselement, z.B. durch eine Drehbewegung einer Welle angetrieben wird. Die Codierung der Position der zweiten zu positionierenden Komponente wird mit Hilfe einer auf der antreibenden Welle angeordneten Kurvenscheibe realisiert. So wird durch Drehung der Antriebswelle über das lineare Stellelement die erste Komponente in ihre Position gebracht und durch Abtastung der Kurvenscheibe die positionierung der zweiten Komponente entsprechend der vorgegebenen Lagebeziehung sicher gestellt.

Ein Nachteil dieser letzteren Methode wird bei der Tolerierung der Einstellgenauigkeiten der beiden zu positionierenden Komponenten sichtbar. Zu allen Positionen des Antriebselementes müssen die (fehlerbehafteten) Positionierungen der einen Komponente mit den (fehlerbehafteten) Positionierungen der anderen Komponente zu einem scharfen Bild führen.

Ein bezüglich der Tolerierung der Einstellgenauigkeiten der einzelnen optischen Komponenten innerhalb eines Zoom-Systems günstigeres Antriebsprinzip ist die Ableitung der Bewegung der einen (angetriebenen) Komponente aus der Bewegung der anderen (antreibenden) Komponente. Die axiale Einstelltoleranz der treibenden Komponente geht dabei nicht als Fehler in die Einstelltoleranz der angetriebenen Komponente ein und beeinflusst somit nicht die Bildschärfe. Derartige Antriebsprinzipien können beispielsweise durch Hebelgetriebe realisiert werden.

Eine derartige Ausführung ist in der DE 43 15 630 A1 beschrieben, in welcher nach Art eines Kniehebelgetriebes an der getriebenen Komponente ein Hebel in einem Drehlager angreift, welcher mit einem zweiten Hebel über ein Drehlager an der angetriebenen Komponente angekoppelt ist. In dem die beiden Hebel verbindenden Drehlager ist ein abtastendes Kugellager angeordnet. Zur ortsfesten Begrenzung des Schwenkbereiches des Hebel systems ist eine Kurvenscheibe vorgesehen. Werden nun beide Komponenten durch eine permanente Kraft aufeinander zu bewegt, legt sich das Kugellager an die Kurvenscheibe an. Die Kurvenscheibe codiert die position der getriebenen Komponente in Abhängigkeit von der Position der treibenden Komponente. Dieses Verstellprinzip ist für Bewegungsverhältnisse von etwa 1:1 günstig realisierbar. Eine Ausführung mit Zugmittel getriebe beschreibt die DE 1 260 292.

Der Erfindung liegt die Aufgabe zu Grunde, eine Anordnung zur Verstellung von Linsengruppen und optischen Komponenten bei Varioabbildungssystemen zu schaffen, bei welcher die Bewegung einer optischen Komponente aus der Bewegung einer anderen optischen Komponente abgeleitet und definiert verstellt werden kann, und die Bewegungen der Komponenten auch mit einem Übersetzungsverhältnis realisiert werden können, welches wesentlich von einem Verhältnis von 1:1 abweicht.

Erfindungsgemäß wird die Aufgabe bei einer nach den Merkmalen des Oberbegriffes des ersten Anspruches ausgebildeten Anordnung mit den im kennzeichnenden Teil dieses Anspruches offenbarten Mitteln gelöst. In den Unteransprüchen sind weitere Ausgestaltungen und Einzelheiten der Erfindung dargelegt.

Das Prinzip des kurvengesteuerten Zugmittels beruht darauf, dass die beiden bewegten Komponenten über das Zugmittel miteinander gekoppelt sind. Die Bewegung der antreibenden Komponente wird durch das Zugmittel konstanter Länge direkt auf die angetriebene Komponente übertragen. Wird durch geeignete Mittel der Verlauf des Zugmittels beeinflusst, führt das zu einer Relativbewegung zwischen den beiden Komponenten. Eine vorteilhafte Konstruktion ergibt sich, wenn die Auslenkung des Zugmittels durch einen Schwenkhebel erfolgt, dessen Schwenkbewegung durch die Abtastung einer Kurvenscheibe oder Abtastkurve gesteuert wird.

Das beschriebene Verfahren ist für gleichsinnige Bewegungen der beiden Komponenten und durch Hinzufügen eines zusätzlichen ortsfesten Umlenkelementes auch für eine gegensinnige Bewegung der beiden Komponenten anwendbar. Das Verhältnis der Bewegungen der beiden Komponenten von 1:1 kann durch Hinzufügen einer losen Rolle und damit durch Anwendung des Prinzips der losen Rolle und des Flaschenzuges variiert werden.

Der Schwenkhebel muss so angeordnet sein, dass sich sein Drehpunkt relativ zur Kurvenscheibe oder Abtastkurve bewegt.

Dabei kann der Schwenkhebel vorteilhaft sowohl an der antreibenden, ersten oder an der angetriebenen, zweiten optischen Komponente schwenkbar angeordnet sein.

Eine vorteilhafte Ausführung ergibt sich, wenn mindestens ein Umlenkelement am freien Ende des Schwenkhebels angeordnet ist, über welches das Zugmittel geführt und umgelenkt wird.

Es ist vorteilhaft, wenn die Steuerkurve im Inneren des Gehäuses ortsfest angeordnet ist. Des Weiteren kann jedoch auch die Steuerkurve an der dem Schwenkhebel gegenüber liegenden optischen Komponente fest angeordnet sein.

Um wesentlich unterschiedliche Verhältnisse der Verschiebungen der beiden Schlitten zu realisieren, ist es vorteilhaft, wenn mindestens ein Umlenkelement am freien Ende des Schwenkhebels und mindestens ein weiteres Umlenkelement an dem Schlitten vorgesehen sind, der die angetriebene optische Komponente trägt und wenn das eine Ende des Zugmittels am die treibende optische Komponente tragenden Schlitten und das andere Ende des Zugmittels am Gehäuse befestigt sind.

Vorteilhaft ist es ferner, dass die Umlenkelemente als Umlenkrollen ausgebildet sind.

Die Erfindung soll nachstehend an einem Ausführungsbeispiel näher erläutert werden. In der Zeichnung zeigen
- Fig.1: vereinfacht ein Mikroskop mit Objektiv und Anordnung zur Verstellung von optischen Komponenten in einem Varioabbildungssystem,
- Fig.2: schematisch den Aufbau der Anordnung mit Verstellmechanismus,
- Fig.3: schematisch den Aufbau mit einem nach Art eines Flaschenzuges geführten Zugmittels und
- Fig.4: eine perspektivische Darstellung des Aufbaues der Anordnung.

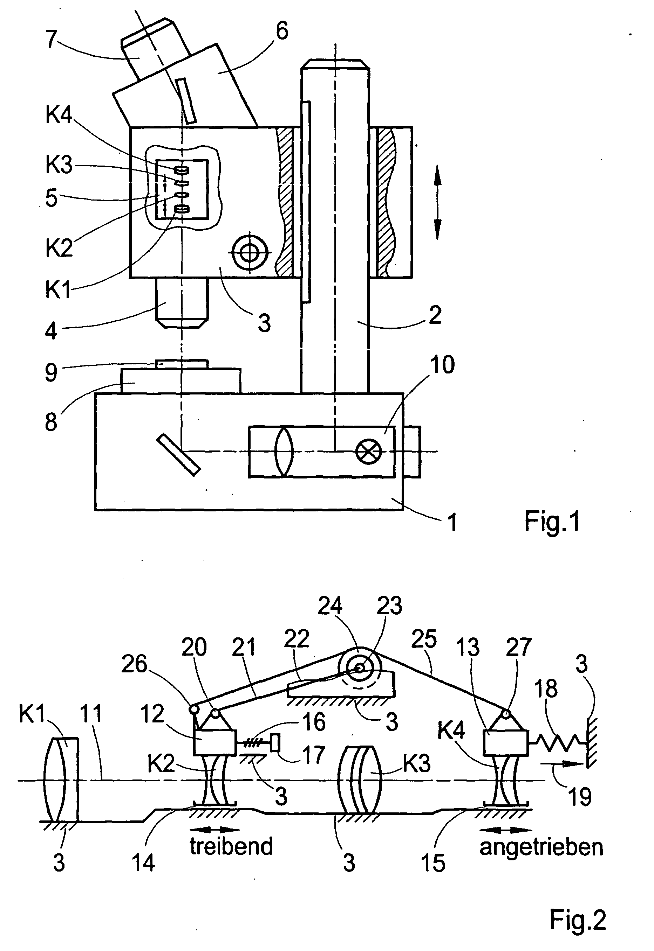

Das in Fig.1 vereinfacht als Beispiel stark vereinfacht dargestellte Mikroskop, beispielsweise ein Stereomikroskop, umfasst beispielsweise ein Stativ oder Ständer mit einem Stativfuß 1 und einer Stativsäule 2, an welcher ein längs der Stativsäule 2 verschiebbares Gehäuse 3 gelagert ist. Am Gehäuse 3 ist in einer Objektivhalterung (nicht dargestellt), mindestens ein Mikroskopobjektiv 4 angeordnet und innerhalb des Gehäuses 3 befindet sich neben anderen, nicht dargestellten, optischen Elementen ein aus mehreren optischen Komponenten K1 bis K4 bzw. Linsengruppen bestehender Vergrößerungswechsler 5 zur Veränderung der Mikroskopvergrößerung. Am oberen Ende des Gehäuses 3 ist eine Okularaufnahme 6 vorgesehen, an der mindestens ein Okular 7 angeordnet ist.

Der Stativfuß 1 trägt oben einen Objekttisch 8, auf welchem das zu untersuchende Objekt 9 und/oder Manipulatoren angeordnet werden können. Im Stativfuß 1 ist im Beispiel die Beleuchtungseinrichtung 10 des Mikroskops, beispielsweise eine Durchlichtbeleuchtungseinrichtung, vorgesehen.

Fig.2 zeigt die optischen Komponenten K1 bis K4, welche entlang der optischen Achse 11 des Mikroskopstrahlenganges positioniert sind und von denen die Komponenten K2 und K4 in oder auf Schlitten 12 und 13 angeordnet sind, welche auf Führungselementen 14 und 15 oder Führungen in Richtung der optischen Achse 1.1 zwecks Veränderung der Vergrößerung der mikroskopischen Abbildung verschiebbar gelagert sind. Die optischen Komponenten K1 und K3 sind fest im Gehäuse 3 positioniert. Der die Komponenten K2 tragende, treibende Schlitten 12 ist über ein Verstellgetriebe 16 mit einem Bedienelement 17 verbunden, mit welchem eine Verschiebung des Schlittens 12 in Richtung der optischen Achse 11 durch den Beobachter ausgeführt werden kann. Der angetriebene Schlitten 13, welcher die optische Komponente K4 trägt, ist über eine Feder 18 oder ein anderes geeignetes, eine Kraft erzeugendes Element oder Baugruppe mit dem Gehäuse 3 verbunden, wobei die Richtung der Kraft so festgelegt ist, dass der angetriebene Schlitten 13 vom treibenden Schlitten 12 weggezogen wird. Die Kraftrichtung ist in Fig. 1 durch den Pfeil 19 gekennzeichnet.

Wie weiterhin in der Fig.2 dargestellt, ist am treibenden Schlitten 12 in einem Drehlager 20 ein Schwenkhebel 21 schwenkbar gelagert, an dessen, dem Drehlager 20 abgewandten Ende eine, eine gehäusefeste Abtastkurve 22 antastende Abtastrolle 23 und ein als Umlenkrolle 24 ausgebildetes Umlenkelement drehbar angeordnet sind. An den beiden Schlitten 12 und 13 sind zur Verbindung derselben die Enden eines Zugmittels 25 konstanter Länge eines Zugmittelgetriebes, vorzugsweise in Drehlagern 26 und 27 befestigt. Als Zugmittel 25 kann sowohl ein band- als auch ein fadenförmiges Element von konstanter Länge Anwendung finden, welches über die Umlenkrolle 24 geführt, umgelenkt und durch die Kraft der die beiden Schlitten 12 und 13 auseinander ziehenden Feder 18 stets gespannt wird. Die Abtastrolle 23 wird dabei stets im Kontakt mit der Abtastkurve 22 gehalten.

Abweichend von Aufbau nach Fig.2 kann jedoch der Schwenkhebel 21 auch an angetriebenen Schlitten 13 im Drehlager 27 befestigt sein (nicht dargestellt). Auch hier liegt die Abtastrolle 23 stets an der Abtastkurve 22 an, wodurch die Auslenkung des Schwenkhebels 21 begrenzt wird.

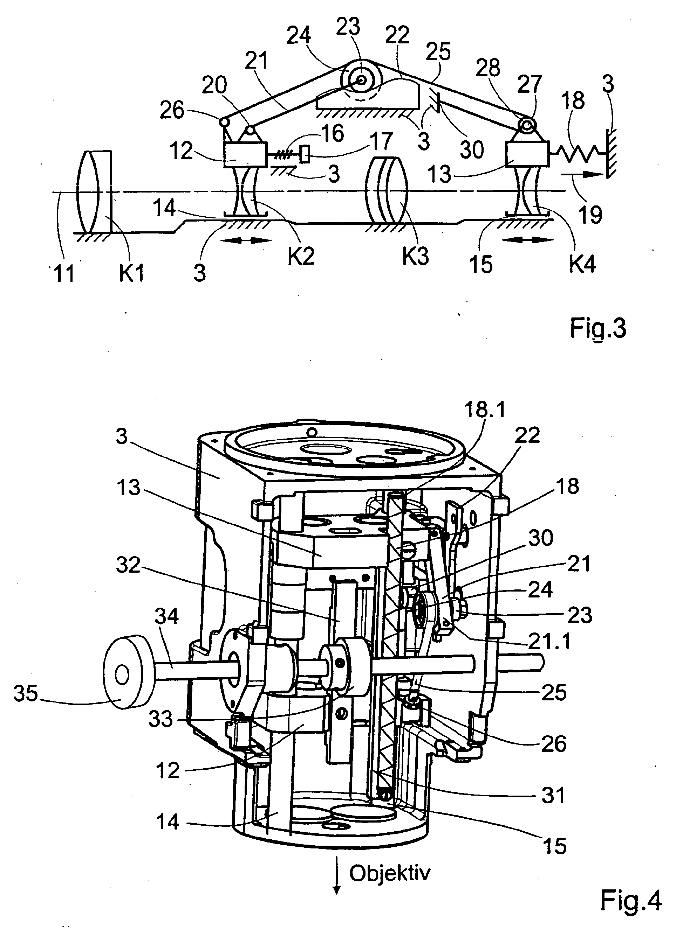

In Fig.3 ist stark vereinfacht eine erfindungsgemäße Anordnung dargestellt, bei der ebenfalls die Bewegung einer angetriebenen optischen Komponente K4 aus der Bewegung einer treibenden optischen Komponente K2 abgeleitet wird, wobei das Verhältnis der Bewegung der treibenden Komponente K2 zur Bewegung der angetriebenen Komponente K4 deutlich von 1:1 abweicht. In dieser Fig.3 bezeichnen gleiche Bezugszeichen gleiche bzw. funktionsgleiche Bauteile. Im Unterschied zur der in Fig.2 dargestellten Anordnung ist die Führung des Zugmittels 25 zwischen den, die Komponenten K2 und K4 tragende Schlitten 12 und 13 nach dem Prinzip der Seilführung des Flaschenzuges mit einer losen und einer festen Rolle realisiert. Das eine Ende des Zugmittels 25 ist am Schlitten 12 befestigt. Am freien Ende des Schwenkhebels 21 ist eine Umlenkrolle 24 (feste Rolle) drehbar gelagert, über welche das Zugmittel 25 läuft und es ablenkt. Das Zugmittel 25 wird dann über eine am Schlitten 13 angeordnete weitere Umlenkrolle 28 (lose Rolle) zu einer am Gehäuse 3 vorgesehenen Befestigungsstelle 30 umgelenkt und dort befestigt. Durch die Kraft der Feder 18 wird das über die Umlenkrolle 24 geführte Zugmittel 25 stets unter Spannung gehalten, womit auch gleichfalls gewährleistet ist, dass die am freien Ende des Hebels 21 zusammen mit der Umlenkrolle 24 angeordnete Abtastrolle 23 stets an der Abtastkurve 22 anliegt.

Es ist selbstverständlich, dass am Schwenkhebel 21 und am Schlitten 13 auch jeweils mehrere, als feste und lose Rollen fungierende Umlenkrollen nach dem Prinzip eines Flaschenzuges vorgesehen werden können. Damit kann das Verhältnis der Bewegungen der Schlitten 12 und 13 mit den Komponenten K2 und K4 zueinander weiter variiert werden.

Die in Fig.4 perspektivisch dargestellte Anordnung zeigt eine mögliche Ausführung der Erfindung in Form eines Vergrößerungswechslers, beispielsweise für ein Stereomikroskop, wobei Variationen in der Ausführung und räumlichen Anordnung einzelner Bauteile und Baugruppen durchaus vorgenommen werden können, ohne den Schutzbereich der Ansprüche zu verlassen. Auch in dieser Fig.4 werden für funktionsgleiche Bauteile und Baugruppen die gleichen Bezugszeichen wie in den anderen Figuren verwendet.

Im Gehäuse 3 sind als Führungselemente 14; 15 Führungsstangen vorgesehen, an bzw. auf welchen die Schlitten 12 und 13 welche die optischen Komponenten K2 und K4 traten, in Richtung der optischen Achse 11 des Mikroskopstrahlenganges verschiebbar gelagert sind. Gleichfalls in Gehäuse 3 fest angeordnet ist die Abtastkurve 22. Am Schlitten 13 ist der Schwenkhebel 21 schwenkbar gelagert, welcher an seinem freien Ende 21.1 die Umlenkrolle 24 und die die Abtastkurve 22 abtastende Abtastrolle 23 trägt. Das die Umlenkrolle 24 umschließende, als Zugband ausgebildete Zugmittel 25 ist mit seinem einen Ende in dem Drehlager 26 des Schlittens 12 und mit seinem anderen Ende im gehäusefesten Drehlager 30 befestigt. Am Schlitten 13 ist ferner eine sich in Richtung der optischen Achse 11 erstreckende Leiste oder Stange 31 fest angeordnet, an deren, vom Schlitten 13 entfernten Ende, ein Ende der Zugfeder 18 befestigt ist. Vorteilhaft ist die Stange 31 deshalb vorgesehen, weil auf diese Weise eine Feder 18 mit einem großen Federweg angeordnet und somit auch ein größerer Verschiebeweg des Schlittens 13 vorgesehen werden kann. Mit ihrem anderen Ende 18.list die Feder 18 am Gehäuse 3 befestigt. Die Federkraft ist so gerichtet, dass sie die beiden Schlitten 12 und 13 auseinander zieht und somit das Zugmittel 25 ständig unter Spannung hält und damit für eine sichere Anlage der Abtastrolle 23 an der Abtastkurve 22 sorgt.

Als Verstellgetriebe (16 in Fig.2) für den Schlitten 12 ist ein Reib- oder Zahnstangengetriebe mit einer Reib- oder Zahnstange 32 vorgesehen, welche mit einem Reibrad oder Zahnrad 33 im Eingriff steht, das auf einer im Gehäuse 3 gelagerten Welle 34 angeordnet ist, die vom Beobachter beispielsweise durch ein Bedienelement in Form eines Drehknopfes 35 zwecks Verschiebung des Schlittens 12 gedreht werden. kann.

Die Wirkungsweise der erfindungsgemäßen Anordnung zur Verstellung der optischen Komponente K4 in Abhängigkeit der Verstellung der optischen Komponente K2 soll nachfolgend an Hand der in Fig.2 dargestellten Anordnung erläutert werden. Durch das Bedienelement 17 und das Verstellgetriebe 16 wird der treibende Schlitten 12 zusammen mit der optischen Komponente K2, z.B. eine Linse oder eine Linsengruppe, in Richtung des zugeordneten Doppelpfeils 29 verschoben.

Damit bewegt sich auch die über den Schwenkhebel 21 mit dem treibenden Schlitten 12 verbundene Abtastrolle 23 entlang der Abtastkurve 22. Der Schwenkhebel 21 mit der Umlenkrolle 24 wird entsprechend deren Profil ausgelenkt. Infolge der konstanten Länge des Zugmittels 25 und in Abhängigkeit der Position der vom Zugmittel 25 umschlossenen Umlenkrolle 24 wird der Schlitten 13 mit der optischen Komponente K4 entsprechend verschoben, wobei gemäß der Anordnung nach Fig. 2 ein Verhältnis der Verschiebewege der beiden Schlitten 12 und 13 ungleich 1:1 realisiert wird. Bei konstanter Auslenkung der Umlenkrolle 24, also bei einer profillosen Abtastkurve würde ein Verschiebungsverhältnis von 1:1 erreicht werden.

Mit einer gemäß Fig.3 gestalteten Anordnung mit fester Umlenkrolle 24 und loser Umlenkrolle 28 kann ein Verhältnis der Verschiebungen beider Schlitten 12 und 13 und damit der optischen Komponenten K2 und K4 von 2:1 bzw. in Abhängigkeit von der Auslenkung der Abtastrolle 23 und der Umlenkrolle 24 an der Abtastkurve 22 geeignete, von 2:1 abweichende Verhältnisse realisiert werden. Werden mehrere feste und lose Umlenkrollen vorgesehen, können weitere Verschiebungsverhältnisse, wie z.B. 3:1, 4:1, etc. verwirklicht werden. So können unterschiedliche gegenseitige Positionen der optischen Komponenten K2 und K4 zueinander und auch zu den anderen Komponenten K1 und K3, wie sie für die Einstellung unterschiedlicher Mikroskopvergrößerungen erforderlich sind, realisiert werden.

In einer weiteren Ausgestaltung der Anordnung zur Verstellung optischer Komponenten kann die Abtastkurve auch an dem Schlitten angeordnet werden, an welchem der Schwenkhebel nicht gelagert ist (nicht dargestellt). Im Falle der Anordnung nach Fig.2 wäre dieses der Schlitten 13.

Die Erfindung wurde in Bezug auf eine besondere Ausführungsform beschrieben. Es ist für einen Fachmann jedoch selbstverständlich, dass Änderungen und Abwandlungen durchgeführt werden können, ohne dabei den Schutzbereich der nachstehenden Ansprüche zu verlassen.

### Bezugszeichenliste

- 1: Stativfuß
- 2: Stativsäule
- 3: Gehäuse
- 4: Mikroskopobjektiv
- 5: Vergrößerungswechsler
- 6: Okularaufnahme
- 7: Okular
- 8: Objekttisch
- 9: Objekt
- 10: Beleuchtungseinrichtung
- 11: optische Achse
- 12; 13: Schlitten
- 14; 15: Führungselemente (Führungen)
- 16: Verstellgetriebe
- 17: Bedienelement
- 18: Feder
- 18.1: Ende
- 19: Pfeil
- 20: Drehlager
- 21: Schwenkhebel
- 21.1: freies Ende
- 22: Abtastkurve
- 23: Abtastrolle
- 24: Umlenkrolle
- 25: Zugmittel
- 26; 27: Drehlager
- 28: Umlenkrolle
- 29: Doppelpfeil
- 30: Befestigungsstelle
- 31: Stange
- 32: Zahnstange
- 33: Zahnrad
- 34: Welle
- 35: Drehknopf

- K1 bis K4: optische Komponenten

## Patentansprüche

1. Anordnung zur Verstellung von optischen Komponenten, insbesondere bei Varioabbildungssystemen, umfassend in einem Gehäuse
- längs der optischen Achse des Abbildungssystems relativ zueinander verschiebbare, optische Komponenten, welche jeweils auf einem, durch im Gehäuse fest angeordnete Führungen geführten Schlitten angeordnet sind,
- Antriebsmittel zur Verschiebung einer verschiebbaren ersten optischen Komponente
- und ein Getriebe zur Realisierung einer Verschiebebewegung einer verschiebbaren zweiten optischen Komponente in Abhängigkeit von der Verschiebebewegung der ersten optischen Komponente, wobei das Getriebe als ein kurvengesteuertes Zugmittelgetriebe mit einem Zugmittel ausgebildet ist, welches die, die optischen Komponenten tragenden Schlitten bzw. die optischen Komponenten verbindet,
**dadurch gekennzeichnet,**
- **dass** das Zugmittelgetriebe einen, an der treibenden, ersten (K2) oder an der angetriebenen, zweiten Komponente (K4) direkt oder an einem, der die Komponenten (K2; K4) tragenden Schlitten (12 oder 13) schwenkbar gelagerten Schwenkhebel (21) und eine, die Schwenkbewegung des Schwenkhebels (21) steuernde Abtastkurve (22) umfasst, und das, die Komponenten (K2; K4) tragenden Schlitten (12 und 13) bzw, die Komponenten (K2; K4) verbindende Zugmittel (25) des Zugmittelgetriebes über das freie Ende des Schwenkhebels (21) geführt ist.

2. Anordnung nach Anspruch 1, **dadurch gekennzeichnet,**
- **dass** der Schwenkhebel am Gehäuse (3) fest und die Abtastkurve (22) an einer der beweglichen Komponenten (K2 oder K4) angeordnet ist.

3. Anordnung nach Anspruch 2, **dadurch gekennzeichnet,**
- **dass** mindestens ein Umlenkelement (24) am freien Ende des Schwenkhebels (21) angeordnet ist, über welches das zugmittel (25) geführt und umgelenkt wird.

4. Anordnung nach einem der Ansprüche 1 bis 3, **dadurch gekennzeichnet,**
- **dass** die Abtastkurve (22) im Innern des Gehäuses (3) ortsfest angeordnet ist.

5. Anordnung nach einem der Ansprüche 1 bis 4,**dadurch gekennzeichnet,**
- **dass** die Abtastkurve (22) an der vom Schwenkhebel (21) entfernt angeordneten, optischen Komponente (K2; oder K4) fest angeordnet ist.

6. Anordnung nach einem der Ansprüche 1 bis 5, **dadurch gekennzeichnet, dass** die Abtastkurve (22) an dem Schlitten (13) fest angeordnet ist, welcher die abgetriebene optische Komponente (K4) trägt.

7. Anordnung nach einem der Ansprüche 1 bis 6, **dadurch gekennzeichnet,**
- **dass** mindestens ein Umlenkelement (24) am freien Ende des Schwenkhebels (21) und mindestens ein weiteres Umlenkelement (28) an dem Schlitten (13) vorgesehen sind, der die angetriebene optische Komponente (K4) trägt
- und **dass** das eine Ende des Zugmittels (25) am, die treibende optische Komponente (K2) tragenden Schlitten (12) und das andere Ende des Zugmittels am Gehäuse (3) befestigt sind.

8. Anordnung nach einem der Ansprüche 1 bis 7, **dadurch gekennzeichnet,**
- **dass** die Umlenkelemente als Umlenkrollen (24; 28) ausgebildet sind.

9. Anordnung nach einem der Ansprüche 1 bis 8, **dadurch gekennzeichnet,**
- **dass** ein krafterzeugendes federndes Element in Form einer Feder (18) vorgesehen ist, welches eine Kraft erzeugt, die so gerichtet ist, dass sie die beiden Schlitten (12 und 13) auseinander zieht und das über den Schwenkhebel (21) geführte Zugmittel (25) ständig spannt.

## Claims

1. Arrangement for adjusting optical components, particularly in variable imaging systems, which in a housing comprises
- optical components which can be displaced relative to each other along the optical axis of the imaging system and which are respectively arranged on a carriage guided by guides fixedly arranged in the housing,
- driving means for displacing a displaceable first optical component
- and a drive for implementing a displacement movement of a displaceable second optical component depending on the displacement movement of the first optical component, wherein the drive is designed as a cam-controlled belt/chain drive with a traction means which connects the carriages bearing the optical components or the optical components,
**characterized**
- **in that** the belt/chain drive comprises a pivoted lever (21) which is pivotably mounted directly on the driving, first component (K2) or on the driven, second component (K4) or which is pivotably mounted on a carriage (12 or 13) bearing the components (K2; K4) and said belt/chain drive comprises a scanning cam (22) which controls the pivoting motion of the pivoted lever (21), and the traction means (25) of the belt/chain drive which connects the carriages (12 and 13) bearing the components (K2; K4) or the components (K2; K4) is guided over the free end of the pivoted lever (21).

2. Arrangement according to Claim 1, **characterized**
- **in that** the pivoted lever is fixedly arranged on the housing (3) and the scanning cam (22) is arranged on one of the moveable components (K2 or K4).

3. Arrangement according to Claim 2, **characterized**
- **in that** at least one deflection element (24) is arranged on the free end of the pivoted lever (21) and is used to guide and deflect the traction means (25).

4. Arrangement according to one of Claims 1 to 3, **characterized**
- **in that** the scanning cam (22) is arranged in a fixed position in the interior of the housing (3).

5. Arrangement according to one of Claims 1 to 4, **characterized**
- **in that** the scanning cam (22) is fixedly arranged on the optical component (K2; or K4) which is arranged at a distance from the pivoted lever (21).

6. Arrangement according to one of Claims 1 to 5, **characterized in that** the scanning cam (22) is fixedly arranged on that carriage (13) which bears the driven optical component (K4).

7. Arrangement according to one of Claims 1 to 6, **characterized**
- **in that** at least one deflection element (24) is provided on the free end of the pivoted lever (21) and at least one further deflection element (28) is provided on the carriage (13) which bears the driven optical component (K4) and
- **in that** the one end of the traction means (25) is attached to the carriage (12) bearing the driving optical component (K2) and the other end of the traction means is attached to the housing (3).

8. Arrangement according to one of Claims 1 to 7, **characterized**
- **in that** the deflection elements are designed as deflection rollers (24; 28).

9. Arrangement according to one of Claims 1 to 8, **characterized**
- **in that** provision is made for a force-generating resilient element in the form of a spring (18) which generates a force directed such that it pulls the two carriages (12 and 13) apart and continuously tensions the traction means (25) guided over the pivoted lever (21).

## Revendications

1. Arrangement de positionnement de composants optiques, notamment sur des systèmes de représentation variables, comprenant dans un boîtier
- des composants optiques pouvant être déplacés les uns par rapport aux autres le long de l'axe optique du système de représentation, lesquels sont respectivement disposés sur un curseur guidé par des guides montés à demeure dans le boîtier,
- des moyens d'entraînement pour déplacer un premier composant optique déplaçable
- et un engrenage pour réaliser un mouvement de déplacement d'un deuxième composant optique déplaçable en fonction du mouvement de déplacement du premier composant optique, l'engrenage étant réalisé sous la forme d'un engrenage à moyen de traction commandé par cames et comprenant un moyen de traction, lequel relie les curseurs supportant les composants optiques ou les composants optiques,
**caractérisé en ce**
- **que** l'engrenage à moyen de traction comprend un levier pivotant (21) monté de manière à pouvoir pivoter directement sur le premier composant (K2) menant ou sur le deuxième composant (K4) mené ou encore sur un curseur (12 ou 13) qui supporte les composants (K2 ; K4) et une came de palpage (22) qui commande le mouvement de pivotement du levier pivotant (21) et le moyen de traction (25) de l'engrenage à moyen de traction, qui relie les curseurs (12 ou 13) qui supportent les composants (K2 ; K4) ou les composants (K2 ; K4), est guidé par le biais de l'extrémité libre du levier pivotant (21).

2. Arrangement selon la revendication 1, **caractérisé en ce que**
- le levier pivotant est monté à demeure sur le boîtier (3) et la came de palpage (22) est disposée sur l'un des composants mobiles (K2 ou K4).

3. Arrangement selon la revendication 2, **caractérisé en ce qu'**au moins un élément de renvoi (24) est disposé à l'extrémité libre du levier pivotant (21), par le biais duquel le moyen de traction (25) est guidé et renvoyé.

4. Arrangement selon l'une des revendications 1 à 3, **caractérisé en ce que** la came de palpage (22) est montée en un endroit fixe à l'intérieur du boîtier (3).

5. Arrangement selon l'une des revendications 1 à 4, **caractérisé en ce que** la came de palpage (22) est montée à demeure sur le composant optique (K2 ou K4) qui est disposé à distance du levier pivotant (21).

6. Arrangement selon l'une des revendications 1 à 5, **caractérisé en ce que** la came de palpage (22) est montée à demeure sur le curseur (13) qui supporte le composant optique mené (K4).

7. Arrangement selon l'une des revendications 1 à 6, **caractérisé en ce qu'**il existe au moins un élément de renvoi (24) à l'extrémité libre du levier pivotant (21) et au moins un élément de renvoi (28) supplémentaire sur le curseur (13) qui supporte le composant optique mené (K4) et qu'une extrémité du moyen de traction (25) est fixée au curseur (12) qui supporte le composant optique menant (K2) et l'autre extrémité du moyen de traction est fixée au boîtier (3).

8. Arrangement selon l'une des revendications 1 à 7, **caractérisé en ce que** les éléments de renvoi sont réalisés sous la forme de galets de renvoi (24 ; 28).

9. Arrangement selon l'une des revendications 1 à 8, **caractérisé en ce qu'**il existe un élément ressort générateur de force sous la forme d'un ressort (18) qui génère une force dirigée de telle sorte qu'elle écarte l'un de l'autre les deux curseurs (12 et 13) et tend constamment le moyen de traction (25) guidé par le biais du levier pivotant (21).
